# EUROPEAN PATENT APPLICATION

(11) **EP 4 653 235 A1**
(43) Date of publication of application: **26.11.2025**
(21) Application number: 25170994.5
(22) Date of filing: 16.04.2025
(51) Int. Cl.: B60L 3/00, B60L 3/04, B60L 3/10, B60W 20/00

(54) **METHOD FOR CONTROLLING POWER GENERATED FROM BATTERY, BATTERY MANAGEMENT SYSTEM AND ELECTRIC VEHICLE USING SAME**

(30) Priority: 24.05.2024 KR 20240068131
(71) Applicant: SAMSUNG SDI CO., LTD., Yongin-si, Gyeonggi-do 17084 (KR)
(72) Inventor: PARK, Jong Sam, 17084 Yongin-Si, Gyeonggi-do (KR)
(74) Representative: Gulde & Partner

(57) **Abstract**

A method of controlling power of a battery of an electric vehicle includes receiving at least one of a brake signal or an accelerator pedal signal from at least one of a brake or an accelerator pedal, determining whether at least one of the brake signal or the accelerator pedal signal satisfies a power cut-off condition, and generating an emergency output cut-off signal in response to the power cut-off condition being satisfied.

## Description

### BACKGROUND

### 1. Field

Aspects of embodiments of the present disclosure relate to a method for controlling battery power, and a battery management system and an electric vehicle using the same.

### 2. Description Of The Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

When a secondary battery is used in an electric vehicle, a battery management system (BMS) monitors the charge and discharge state of the secondary battery and controls the secondary battery to operate in an optimal state. In general, the monitoring and control of the overall operating state of an electric vehicle is carried out by an electronic control unit (ECU). For example, an electronic control unit corresponds to an electronic device that receives and calculates data transmitted from various sensors installed in an electric vehicle, such as the accelerator pedal, brake, power button, vehicle interior temperature sensor, steering device sensor, etc., of the vehicle, and then controls a drive device such as a motor or other actuators. However, if there is a problem with the electronic control unit, the drive device may not operate accordingly even if the driver operates the brakes, or the power output from the battery may not be controlled, which may lead to a car accident or casualties.

The above information disclosed in this Background section is for enhancement of understanding of the background of the present disclosure, and therefore, it may contain information that does not constitute related (or prior) art.

### SUMMARY

Aspects of embodiments of the present disclosure are directed to a method for controlling battery power, a battery management system, and an electric vehicle to solve the problems described above.

These and other aspects and features of the present disclosure will be described in or will be apparent from the following description of embodiments of the present disclosure.

According to some embodiments of the present disclosure, there is provided a method of controlling power of a battery of an electric vehicle, including: receiving at least one of a brake signal or an accelerator pedal signal from at least one of a brake or an accelerator pedal; determining whether at least one of the brake signal or the accelerator pedal signal satisfies a power cut-off condition; and generating an emergency output cut-off signal in response to the power cut-off condition being satisfied.

In some embodiments, the determining whether at least one of the brake signal or the accelerator pedal signal satisfies the power cut-off condition includes: determining whether a value of the brake signal is greater than or equal to a reference value; and determining whether the brake signal lasts for a set period of time or longer in response to the value of the brake signal being greater than or equal to the reference value.

In some embodiments, the determining whether at least one of the brake signal or the accelerator pedal signal satisfies the power cut-off condition includes: comparing a value of the accelerator pedal signal with an output current of the battery; determining whether the output current relative to the value of the accelerator pedal signal is greater than or equal to a set value; and determining whether the accelerator pedal signal lasts for a set period of time or longer in response to the output current relative to the value of the accelerator pedal signal being greater than or equal to the set value.

In some embodiments, the determining whether at least one of the brake signal or the accelerator pedal signal satisfies the power cut-off condition includes: comparing a value of the brake signal with an output current of the battery; determining whether the output current relative to the value of the brake signal is greater than or equal to a set value; and determining whether the brake signal lasts for a set period of time or longer in response to the output current relative to the value of the brake signal being greater than or equal to the set value.

In some embodiments, the determining whether at least one of the brake signal or the accelerator pedal signal satisfies the power cut-off condition includes: determining whether each of a value of the brake signal and a value of the accelerator pedal signal is greater than or equal to a set value; and determining whether the brake signal and the accelerator pedal signal last for a set period of time or longer in response to each of the value of the brake signal and the value of the accelerator pedal signal being greater than or equal to the set value.

In some embodiments, the method further includes: receiving at least one of an ECU brake signal or an ECU accelerator pedal signal from an electronic control unit (ECU), wherein the determining whether at least one of the brake signal or the accelerator pedal signal satisfies the power cut-off condition includes: calculating a difference between a value of at least one of the ECU brake signal or the ECU accelerator pedal signal and a value of at least one of the brake signal or the accelerator pedal signal; and determining whether the difference is greater than or equal to a set value.

In some embodiments, the method further includes: transmitting the emergency output cut-off signal to the electronic control unit.

In some embodiments, the method further includes: determining whether a power-off signal is received from a power button; and transmitting the emergency output cut-off signal to a power control unit in response to the power-off signal being received.

According to some embodiments of the present disclosure, there is provided a computer program stored on a computer-readable recording medium for executing the method according to the above on a computer.

According to some embodiments of the present disclosure, there is provided a battery management system including: a vehicle emergency stop determination part configured to determine whether a power cut-off condition is satisfied based on at least one of a brake signal or an accelerator pedal signal, and to generate an emergency power cut-off signal in response to the power cut-off condition being satisfied; and a battery management part configured to monitor a state of a battery module and to control operation of the battery module based on the state of the battery module.

In some embodiments, the vehicle emergency stop determination part is configured to generate the emergency power cut-off signal in response to a value of the brake signal being greater than or equal to a reference value and the brake signal lasts for a set period of time or longer.

In some embodiments, the vehicle emergency stop determination part is configured to generate the emergency power cut-off signal in response to an output current of the battery module relative to a value of the accelerator pedal signal being greater than or equal to a set value and the accelerator pedal signal lasting for a set period of time or longer.

In some embodiments, the vehicle emergency stop determination part generates the emergency power cut-off signal in response to an output current of the battery module relative to a value of the brake signal being greater than or equal to a set value and the brake signal lasting for a set period of time or longer.

In some embodiments, the vehicle emergency stop determination part is configured to generate the emergency power cut-off signal in response to each of a value of the brake signal and a value of the accelerator pedal signal being greater than or equal to a set value, and the brake signal and the accelerator pedal signal lasting for a set period of time or longer.

In some embodiments, the vehicle emergency stop determination part is configured to: receive at least one of an ECU brake signal or an ECU accelerator pedal signal from an electronic control unit (ECU), and generate the emergency power cut-off signal in response to a difference between a value of at least one of the ECU brake signal or the ECU accelerator pedal signal and a value of at least one of the brake signal or the accelerator pedal signal being greater than or equal to a set value.

In some embodiments, the vehicle emergency stop determination part is configured to transmit the emergency power cut-off signal to the electronic control unit.

In some embodiments, the vehicle emergency stop determination part is configured to transmit the emergency power cut-off signal to a power control unit in response to a power-off signal being received from a power button.

According to some embodiments of the present disclosure, there is provided an electric vehicle including: a power button configured to generate a power-on signal or a power-off signal in response to a first operation of a user; a brake configured to generate a brake signal in response to a second operation of the user; an accelerator pedal configured to generate an accelerator pedal signal in response to a third operation of the user; a battery module configured to supply electrical power; a battery management system configured to monitor a state of the battery module and to control operation of the battery module based on the state of the battery module; and a power control unit configured to control a power output of the battery module, wherein the battery management system is configured to determine whether a power cut-off condition is satisfied based on at least one of the brake signal or the accelerator pedal signal, and to generate an emergency power cut-off signal in response to the power cut-off condition being satisfied.

In some embodiments, the battery management system is configured to transmit the emergency power cut-off signal to the power control unit in response to a power-off signal being received from the power button.

In some embodiments, the battery management system is configured to: receive at least one of an ECU brake signal or an ECU accelerator pedal signal from an electronic control unit (ECU), and generate and transmit the emergency power cut-off signal to the electronic control unit in response to a difference between a value of at least one of the ECU brake signal or the ECU accelerator pedal signal and a value of at least one of the brake signal or the accelerator pedal signal being greater than or equal to a set value.

According to some embodiments of the present disclosure, the battery management system can supplementarily control (e.g., in addition to the ECU) the power of the vehicle, thereby preventing or mitigating accident damage, in an urgent situation (e.g., an emergency situation) where the ECU of the electric vehicle fails to transfer an appropriate power control signal to the power control device or power relay assembly (PRA) that supplies or cuts off power to the drive device based on signals received from various modules (e.g., a brake pedal, an accelerator pedal, a power button, etc.) of the electric vehicle.

According to some embodiments of the present disclosure, the battery management system can supplementarily perform (e.g., in addition to the ECU) the power control of the electric vehicle according to the operating state of the electronic control unit by not only receiving signals from the accelerator pedal or brake but also receiving signals from the electronic control unit that performs priority power control.

According to some embodiments of the present disclosure, the battery management system can receive signals directly from the accelerator pedal or brake, and if the electronic control unit that performs priority power control does not operate properly, the battery management system can predominantly perform the power control of the electric vehicle. Accordingly, power control can be performed appropriately even in an urgent situation (e.g., an emergency situation) where the electric vehicle is not operating as intended by the driver, making it possible to prevent or mitigate accident damage.

However, aspects and features of the present disclosure are not limited to those described above, and other aspects and features not mentioned will be clearly understood by a person skilled in the art from the detailed description, described below

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a block diagram of a power control system of an electric vehicle in accordance with some embodiments of the present disclosure.
FIG. 2 is a block diagram of a power control system of an electric vehicle in accordance with some embodiments of the present disclosure.
FIG. 3 is a diagram showing the detailed configuration of a battery management system in accordance with some embodiments of the present disclosure.
FIG. 4 is a diagram showing a method in which the battery management system controls the battery power of the electric vehicle according to some embodiments of the present disclosure.
FIG. 5 is a flowchart showing a method in which the battery management system of FIG. 4 determines whether the power cut-off condition is satisfied according to some embodiments of the present disclosure.
FIG. 6 is a diagram showing a method in which the battery management system controls the power of the electric vehicle according to some embodiments of the present disclosure.
FIG. 7 is a flowchart showing a method in which the battery management system of FIG. 6 determines whether the power cut-off condition is satisfied according to some embodiments of the present disclosure.
FIG. 8 is a diagram showing a method in which the battery management system controls the power of the electric vehicle according to some embodiments of the present disclosure.
FIG. 9 is a flowchart showing a method in which the battery management system of FIG. 8 determines whether the power cut-off condition is satisfied according to some embodiments of the present disclosure.
FIG. 10 is a flowchart showing a method in which the battery management system of FIG. 8 determines whether the power cut-off condition is satisfied according to some embodiments of the present disclosure.
FIG. 11 is a flowchart showing a method in which the battery management system of FIG. 8 determines whether the power cut-off condition is satisfied according to some embodiments of the present disclosure.
FIG. 12 is a diagram showing an example of an electric vehicle including a battery management system that uses a power control method for an electric vehicle in accordance with some embodiments of the present disclosure.
FIGS. 13 and 14 show a battery pack according to one or more embodiments of the present disclosure.
FIGS. 15 and 16 show a vehicle body and vehicle body parts having a battery pack according to one or more embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

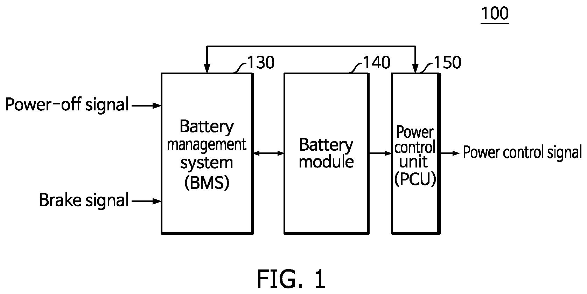

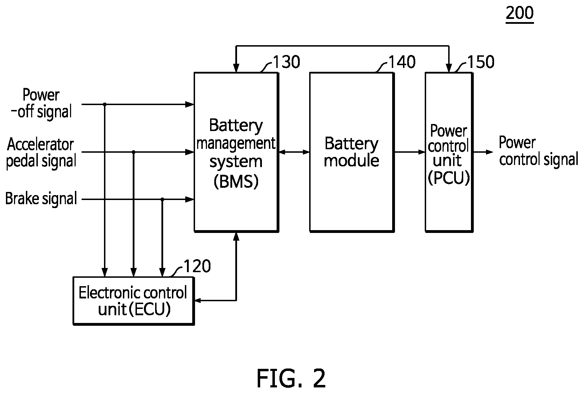

FIG. 1 is a block diagram of a power control system 100 of an electric vehicle in accordance with some embodiments of the present disclosure. In a normally running electric vehicle, when an electronic control unit (ECU), here not shown but for example the ECU 120 in FIG. 2, receives a signal from a brake pedal or an accelerator pedal, the electronic control unit can generate a signal for appropriately controlling the power supplied from the battery to the drive device, such as a motor, according to each of the corresponding signals. Further, when a user presses the power button for a certain period of time while the electric vehicle is running or stopped, the electronic control unit may cut off or interrupt the power supply from the battery in response to a signal transmitted from the power button. However, because it is difficult to properly control or cut off the power supplied from the battery in the above case if the electronic control unit does not operate normally, the speed of the electric vehicle may not be adjusted as the user intended. Therefore, there may be a need for a method that allows the power supplied from the battery to be controlled or cut off based on at least some of a power button signal, accelerator pedal signal, or brake signal even when the electronic control unit does not operate normally. According to embodiments, a battery management system (BMS) that monitors the operating state of the battery and controls its operation may control or cut off the power supplied from the battery in place of or in cooperation with the electronic control unit.

The power control system 100 of the electric vehicle may include a battery management system 130, a battery module 140, and a power control unit (PCU) 150.

According to some embodiments, the battery management system 130 may monitor the state of the battery module 140 and control the operation of the battery module 140 based on the state of the battery module 140. Further, the battery management system 130 may receive a brake signal from the brake pedal and/or an accelerator pedal signal from the accelerator pedal independently of the electronic control unit. Moreover, the battery management system 130 may receive a battery output signal (e.g., an output current signal) from the battery module 140. The battery management system 130 may determine whether the operation of the electronic control unit is abnormal, for example, based on at least one of the received brake signal value or battery output signal value or accelerator pedal signal. If it is determined that the electronic control unit is not operating normally, the battery management system 130 may transfer a power supply reduction signal directly to the power control unit 150 according to the received brake signal value and/or the accelerator pedal signal. In some examples, the power control unit 150 may transmit a power control signal including a power supply reduction signal to a drive device (e.g., a motor). In some other examples, the power control unit 150 may transmit a power control signal to a relay (e.g., a power relay assembly) or a switch that controls the supply of power outputted from the battery module 140. In yet other examples, the battery management system 130 may transmit a power control signal directly to the relay or switch. According to this configuration, the battery management system 130 can induce deceleration or stopping of the electric vehicle by appropriately adjusting the power supplied from the battery module 140 to the drive device according to the brake signal value and/or accelerator signal value.

According to some embodiments, the battery management system 130 may directly receive a power-off signal separately from (e.g. independent of) the electronic control unit. Further, the battery management system 130 may receive a battery output signal value from the battery module 140. The battery management system 130 may determine whether the operation of the electronic control unit is abnormal, for example, based on at least one of the received power-off signal or battery output signal. If the battery management system 130 determines that the electronic control unit is not operating normally, the battery management system 130 may transfer a power supply cut-off signal to the power control unit 150 according to the received power-off signal. In some examples, the power control unit 150 may transmit a power control signal including the power supply cut-off signal to the drive device. In some examples, the power control unit 150 may transmit the power control signal to a relay or switch that controls the supply of power outputted from the battery module 140. In yet other examples, the battery management system 130 may transmit the power control signal directly to the relay or switch. According to this configuration, the battery management system 130 can induce a stop of the electric vehicle by appropriately cutting off the power supplied from the battery module 140 to the drive device according to the power-off signal value.

According to some embodiments, the battery management system 130 may concurrently (e.g., simultaneously) receive a power-off signal from the power button and a brake signal from the brake pedal, separately from (e.g. independent of) the electronic control unit. Further, the battery management system 130 may receive a battery output signal from the battery module 140. The battery management system 130 may determine whether the operation of the electronic control unit is abnormal based on at least one of the received power-off signal, brake signal, or battery output signal. For example, because the vehicle decelerates or stops if the user depresses the brake pedal for a certain period of time (e.g., for about 10 seconds) during normal traveling of the electric vehicle, it is unlikely that the user will press the power-off button at the same time. Therefore, when the battery management system 130 receives a power-off signal as well while continuously receiving a brake signal for a set or predetermined period of time or longer, the battery management system 130 may determine that the electronic control unit that controls the output of the battery is not operating normally if it receives a power output signal greater than or equal to a certain value from the battery module 140. If the battery management system 130 determines that the electronic control unit is not operating normally, the battery management system 130 may transfer a power supply cut-off signal to the power control unit 150. In some examples, the power control unit 150 may transmit a power control signal including a power supply cut-off signal to the drive device. In some other examples, the power control unit 150 may transmit the power control signal to the relay or switch that controls the supply of power outputted from the battery module 140. In still other examples, the battery management system 130 may transmit the power control signal directly to the relay or switch. According to this configuration, the battery management system 130 can induce deceleration or stopping of the electric vehicle by appropriately controlling or cutting off the power supplied from the battery module 140 to the drive device according to the power-off signal value and the brake signal value.

Through the configuration described above, it is possible to receive signals generated by operating various modules (e.g., the brake pedal, the accelerator pedal, the power button, etc.) by the user of the electric vehicle, and determine whether the electronic control unit is operating abnormally based on the received signals. Further, in an urgent situation (e.g., an emergency situation) where the electronic control unit does not operate normally, accident damage can be prevented or mitigated by adjusting or stopping the speed of the electric vehicle by supplementarily performing power control of the battery in the manner of supplying or cutting off the power supplied from the battery of the electric vehicle to the drive device.

FIG. 2 is a block diagram of a power control system 200 of an electric vehicle in accordance with some embodiments of the present disclosure. In some embodiments, the power control system 200 of the electric vehicle may include a battery management system 130, a battery module 140, a power control unit 150, and an electronic control unit 120. The difference between the power control system 200 and the power control system 100 shown in FIG. 1 is that the battery management system 130 generates a power control signal based not only on signals transmitted from the power button, accelerator pedal, brake, or the like but also based on a signal transmitted from the electronic control unit 120. Therefore, descriptions of the parts shared/common with FIG. 1 may not be repeated below.

In some embodiments, each of the battery management system 130 and the electronic control unit 120 may independently receive at least one or more of an accelerator pedal signal from the accelerator pedal, a brake signal from the brake pedal, or a power-off signal from the power button. Further, the battery management system 130 may receive a battery output signal from the battery module 140. In a normal electric vehicle running situation, the electronic control unit 120 may generate a power control signal based on one or more pieces of signal information received and transmit it to the power control unit 150 or the drive device. Independently of or concurrently (e.g., simultaneously) with it, if the battery management system 130 determines that the electronic control unit 120 is operating abnormally or a power cut-off condition is satisfied based on the one or more pieces of signal information received, the battery management system 130 may transmit a power control signal including a power supply signal, a power reduction signal, or a power cut-off signal to the electronic control unit 120, the power control unit 150, or the drive device. Accordingly, the electronic control unit 120 that has received the power control signal from the battery management system 130 may control the power control unit 150, the relay, or the drive device.

Further, if the battery management system 130 determines that the electronic control unit 120 is operating abnormally despite having transferred the power control signal to the electronic control unit 120, the battery management system 130 may transmit a power control signal to the power control unit 150, the relay, or the drive device in the manner described with reference to FIG. 1.

For example, a case where the user operates the vehicle brake pedal and accelerator pedal at the same time may be determined as an urgent situation (e.g., an emergency situation). To determine whether a situation falls into such an urgent situation, the battery management system 130 may concurrently (e.g., simultaneously) receive a brake signal and an accelerator pedal signal, and determine that the user is concurrently (e.g., simultaneously) operating the brake pedal and the accelerator pedal based on the value and duration of each signal. Further, the battery management system 130 may determine that the electronic control unit 120 is not operating normally if a battery real-time output value does not correspond to a brake signal value or its duration based on a battery power output value received from the battery module 140.

Through such a configuration, the battery management system 130 can directly control (e.g., by bypassing the ECU 120) the power control unit 150, relay, or drive device when detecting an abnormal operation of the electronic control unit 120. In some other examples, if the electronic control unit 120 operates normally but a problem occurs only in the communication between the electronic control unit 120 and other components, the battery management system 130 may induce power control by the electronic control unit 120 by transmitting a power control signal to the electronic control unit 120.

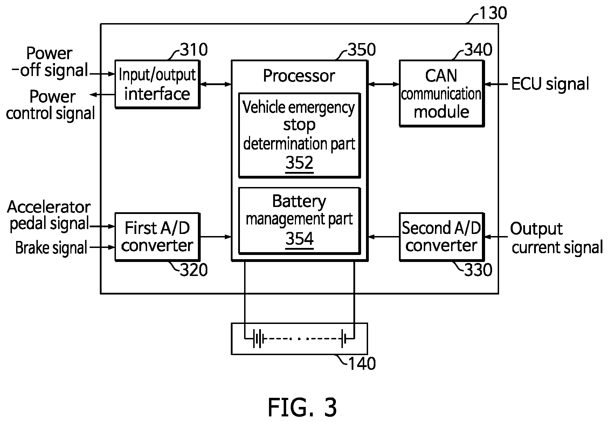

FIG. 3 is a diagram showing the detailed configuration of a battery management system in accordance with some embodiments of the present disclosure. In some embodiments, the battery management system 130 may include an input/output interface 310, analog-to-digital (A/D) converters 320 and 330, a controller area network (CAN) communication module 340, and a processor 350. Further, the processor 350 includes a vehicle emergency stop determination part 352 and a battery management part 354.

In general, the battery management system 130 can manage the operating state of the battery module 140 or the battery cells included in the battery module 140. For example, the battery management system 130 can prevent overcharging, overdischarging, overheating, etc., by monitoring the voltage, temperature, and state of the battery cells, and can perform cell balancing or maintaining a balance of the voltages of multiple battery cells, etc. Further, the battery management system 130 may provide battery state information or control the operation of the battery module 140 by communicating with other components inside the electric vehicle or external systems via the CAN communication module 340. The function of managing the battery state and the operation as a whole in this way may be performed by the battery management part 354 of the processor 350.

In some embodiments, the battery management system 130 may receive a power on/off signal from the power button via the input/output interface 310, or transmit a power control signal to the relay or power control unit that controls the power supply to the drive device including the motor.

In some embodiments, the processor 350 may receive an accelerator pedal signal from the accelerator pedal and/or a brake signal from the brake pedal, for example, via the first A/D converter 320. For example, each of the accelerator pedal or the brake may generate an accelerator pedal signal or brake signal in an analog form in terms of the reliability of signal information for the safety of the electric vehicle. This analog signal may be converted into a digital signal via the first A/D converter 320, and the processor 350 may receive and analyze the corresponding converted digital signal.

In some embodiments, the processor 350 may receive a battery output current signal from the power control unit or the battery module via the second A/D converter 330. The processor 350 may generate a power control signal or manage the state and operation of the battery module based on the received battery output current signal. In FIG. 3, the first A/D converter 320 and the second A/D converter 330 are shown as separate components but are not limited thereto, and the corresponding converters may be integrated and implemented as a single component.

In some embodiments, the processor 350 may receive an ECU signal from the electronic control unit via the CAN communication module 340. Here, when the electronic control unit receives an accelerator pedal signal, a brake signal, or a power on/off signal from the accelerator pedal, the brake pedal, or the power button, the electronic control unit may transmit a power control signal generated based on the received signal to the power control unit, etc. Further, the electronic control unit may transmit at least one of the received accelerator pedal signal, brake signal, or power on/off signal to the battery management system 130 as an ECU signal.

In some embodiments, if the vehicle emergency stop determination part 352 determines that the electronic control unit is operating abnormally based on the received signal or information, the vehicle emergency stop determination part 352 may further determine whether the situation requires a vehicle emergency stop supplementarily through the power control by the battery management system 130. For example, the vehicle emergency stop determination part 352 may determine whether the brake signal, the accelerator pedal signal, the power-off signal, and/or a combination thereof satisfies a power cut-off condition. Accordingly, the vehicle emergency stop determination part 352 may transmit a power control signal including an emergency output cut-off signal to the power control unit, relay, and/or drive device, for example via the input/output interface 310, if it determines that the received signals satisfy the power cut-off condition. In this way, the vehicle emergency stop determination part 352 of the battery management system 130 can generate a power control signal based on the signals received from the brake, the accelerator pedal, the power button, or the electronic control unit, thereby reducing or stopping the speed of the electric vehicle in an urgent situation (e.g., an emergency situation). For example, the battery management system can supplementarily control the power of the vehicle, thereby preventing or mitigating accident damage, in an urgent situation (e.g., an emergency situation) where the ECU of the electric vehicle fails to transfer an appropriate power control signal to the power control device or power relay assembly that supplies or cuts off power to the drive device based on signals received from various modules (e.g., a brake pedal, an accelerator pedal, a power button, etc.) of the electric vehicle.

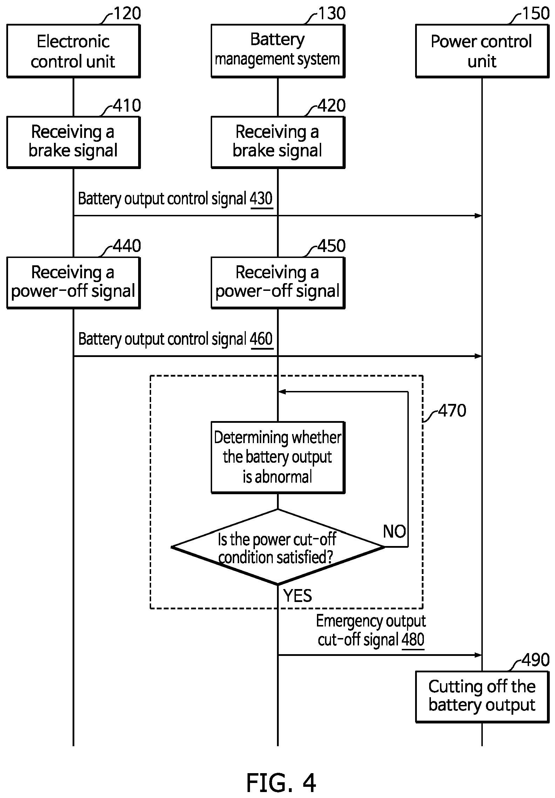

FIG. 4 is a diagram showing a method in which the battery management system 130 controls the battery power of the electric vehicle according to some embodiments of the present disclosure. In some embodiments, when the user operates the brake pedal while driving, each of the electronic control unit 120 and the battery management system 130 may receive a brake signal from the brake pedal (410, 420).

If the electric vehicle is operating normally, the electronic control unit 120 may transmit a battery output control signal 430, including a signal to reduce or cut off the battery output according to the brake signal from the user, to the power control unit 150. The power control unit 150 may reduce or cut off the power supplied from the battery to the drive device (e.g., the motor) according to the battery output control signal 430 received from the electronic control unit 120 (490).

In some examples, if the electric vehicle is operating abnormally, such as for example, when communication between the brake pedal and the electronic control unit 120 is not performed seamlessly, the electronic control unit 120 may not receive a brake signal from the brake pedal (410) or may not properly recognize the reception of the brake signal. In such examples, the electronic control unit 120 may not transmit the battery output control signal 430 to the power control unit 150. Accordingly, the power control unit 150 may fail to execute the cut-off of the battery output to the drive device (490), and an urgent situation (e.g., an emergency situation) where the electric vehicle does not decelerate or stop may occur, which may be contrary to the intention of the user to decelerate by operating the brake pedal.

In such an urgent situation, the user may try to turn off the power by operating the power button provided on the electric vehicle. In such examples, the battery management system 130 may receive a power-off signal from the power button at the same time as the electronic control unit 120 via the input/output interface 310 (or 440, 450). In a normal operating state, the electronic control unit 120 may generate a battery output control signal 460 according to the received power-off signal and transmit it to the power control unit 150.

For example, the electronic control unit 120 may receive the power-off signal under the following conditions (440). As set forth in the table below, the electronic control unit 120 may receive the power-off signal (440), if communication between the electronic control unit 120 and the brake pedal is executed normally and communication between the electronic control unit 120 and the power button is also executed normally (i.e., Case 1), if the communication between the electronic control unit 120 and the brake pedal is executed normally but an abnormality occurs in the communication between the electronic control unit 120 and the power button (i.e., Case 2), if an abnormality occurs in the communication between the electronic control unit 120 and the brake pedal but the communication between the electronic control unit 120 and the power button is normal (i.e., Case 3), and if abnormalities occur in both the communication between the electronic control unit 120 and the brake pedal and the communication between the electronic control unit 120 and the power button (i.e., Case 4).

| | | Communication between electronic control unit 120 and power button | |
|---|---|---|---|
| | | Normal | Abnormal |
| Communication between electronic control unit 120 and brake pedal | Normal | Case 1 | Case 2 |
| | Abnormal | Case 3 | Case 4 |

In Case 1, the electronic control unit 120 may transmit the battery output control signal 460 to the power control unit 150 according to the received power-off signal, and accordingly, the power control unit 150 may execute the cut-off of the battery output to the drive device of the electric vehicle (490). This situation corresponds to a state in which the intention of the user who operated the brake pedal for a certain period of time or pressed the power button to turn off the power has been achieved normally.

In Case 2, because the electronic control unit 120 has not properly received the power-off signal or has not recognized the power-off signal even after receiving it, the power control unit 150 may not receive the battery output control signal 460 from the electronic control unit 120. Accordingly, because the battery output has already been cut off according to the brake signal (410, 430, 490) even if the power control unit 150 has not executed the cut-off of the battery output, the intention of the user pressing the power button to turn off the power can be actually achieved.

In Case 3, because the electronic control unit 120 has not received the brake signal or has not recognized the brake signal even after receiving it in response to the user operating the brake pedal for a certain period of time or longer, the power control unit 150 may not receive the battery output control signal 430 from the electronic control unit 120 and thus the battery output may not be cut off. However, as the electronic control unit 120 receives the power-off signal (440), the power control unit 150 may receive the battery output control signal 460, and accordingly, the power control unit 150 may cut off the output of the battery (490). Therefore, the intention of the user to decelerate or stop the electric vehicle can be achieved by pressing the power button instead of operating the brake pedal for a certain period of time or longer.

In Case 4, because the electronic control unit 120 has not actually received the brake signal and the power-off signal even if the user pressed the power button to turn off the power while operating the brake pedal for a certain period of time or longer, the power control unit 150 may not be able to receive the battery output control signal from the electronic control unit 120, and thus the power control unit 150 may not be able to cut off the battery output. In such an emergency situation, the battery management system 130 may control the battery power as a supplementary entity.

In some embodiments, in an emergency situation, if the battery management system 130 receives the brake signal and the power-off signal (420, 450) and a power cut-off condition is satisfied (470), an emergency output cutoff signal may be generated. Thereby an accident or damage may be prevented or mitigated in an urgent situation (e.g., an emergency situation). For example, as a result of determining whether the battery output is abnormal based on the received signals, the battery management system 130 may transmit an emergency output cut-off signal 480 directly to the power control unit 150 (e.g., without first going through the ECU 120). Accordingly, the power control unit 150 can cut off the battery output (490).

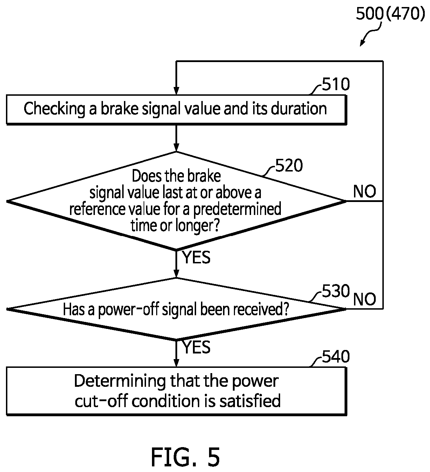

FIG. 5 is a flowchart showing a method 500 in which the battery management system 130 of FIG. 4 determines whether the power cut-off condition is satisfied according to some embodiments of the present disclosure. Referring to FIG. 5, the battery management system 130 (or the vehicle emergency stop determination part 352 of the processor 350) may check a brake signal value and its duration (510).

The battery management system 130 may determine whether the brake signal value is greater than or equal to a set or predetermined reference value. If the brake signal value is greater than or equal to the set or predetermined reference value, the battery management system 130 may determine whether the duration of the brake signal value greater than or equal to the set or predetermined reference value lasts for a set or predetermined reference time or longer (520). If the brake signal value does not last at or above the set or predetermined reference value for the reference time or longer, the battery management system 130 may wait until it receives the next brake signal. Further, when the battery management system 130 receives the next brake signal, it may iteratively (e.g., repeatedly) execute actions 510 and 520.

However, in action 520, if the brake signal value lasts at or above the set or predetermined reference value for the reference time or longer, the battery management system 130 may determine whether a power-off signal has been received from the power button (530). If the battery management system 130 has not received the power-off signal, it may determine that the electric vehicle is not in an emergency situation. For example, the battery management system 130 may determine that the power cut-off condition has not been satisfied and wait to see whether the next brake signal or power-off signal is received.

Next, in action 530, if the battery management system 130 has received the power-off signal, the battery management system 130 may determine that an operation abnormality of the electronic control unit 120 has occurred, for instance. Since both conditions 520 and 530 have been fulfilled, for example, the battery management system 130 may determine that the power cut-off condition has been satisfied (540).

Through such a configuration, even if the electronic control unit 120 fails to transfer the battery output control signals 430 and 460 to the power control unit 150 in an abnormal situation where a problem has occurred in communication in any one of between the electronic control unit 120 and the brake pedal and between the electronic control unit 120 and the power button, the battery management system 130 may receive the brake signal 420 and the power-off signal 450 independently of the electronic control unit 120. In such examples, if the received signals satisfy the power cut-off condition (e.g., Case 4), the battery management system 130 may transmit the emergency output cut-off signal 480 directly to the power control unit 150 (e.g., by bypassing the ECU 120), thereby causing the power control unit 150 to cut off the output of the battery (490). For example, if either the brake or power button that can stop the electric vehicle does not operate normally, the battery management system is operable as a supplementary means to control or cut off the battery output, which can enhance the safety of the electric vehicle.

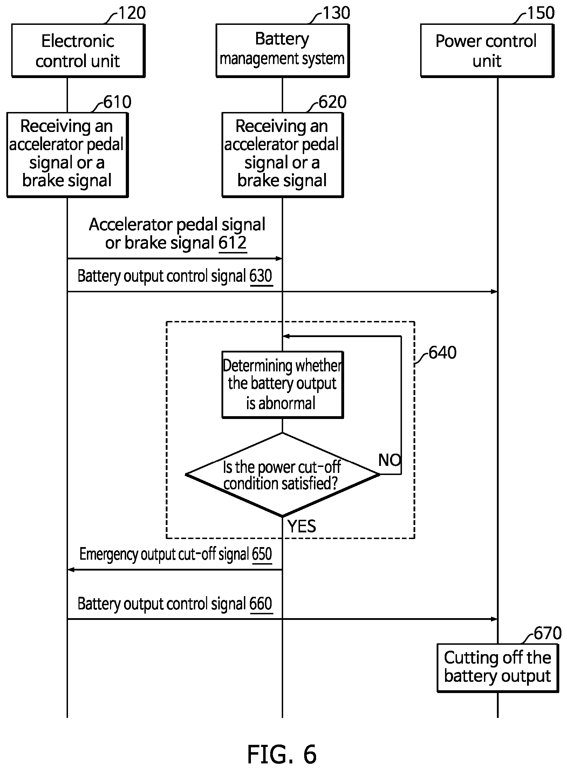

FIG. 6 is a diagram showing a method in which the battery management system 130 controls the power of the electric vehicle according to some embodiments of the present disclosure. Referring to FIG. 6, each of the electronic control unit 120 and the battery management system 130 may receive at least one of an accelerator pedal signal (or a BMS accelerator pedal signal) or a brake signal (or a BMS brake signal) (610, 620). Further, the battery management system 130 may receive at least one of an accelerator pedal signal (or an ECU accelerator pedal signal) or a brake signal (or an ECU brake signal) recognized by the electronic control unit 120 from the electronic control unit 120 via CAN communication (612).

If the electric vehicle is operating normally, when the electronic control unit 120 receives at least one of the accelerator pedal signal or the brake signal (610), the electronic control unit 120 may generate a battery output control signal 630 that matches the corresponding signal and transmit it to the power control unit 150. Here, when the electronic control unit 120 receives both the accelerator pedal signal and the brake signal at the same time, it can be presumed that the user is not in a normal situation (e.g., an emergency situation). In such examples, the electronic control unit 120 may transmit a battery output cut-off signal as the battery output control signal 630 to the power control unit 150. Accordingly, the power control unit 150 may cut off the battery output (670). In an abnormal case where the electronic control unit 120 fails to receive the accelerator pedal signal and the brake signal at the same time or fails to recognize the reception of the brake signal, the electronic control unit 120 may transmit an output increase signal as the battery output control signal 630 to the power control unit 150. In such examples, an urgent situation (e.g., an emergency situation) where the electric vehicle accelerates contrary to the original intention of the user may be caused.

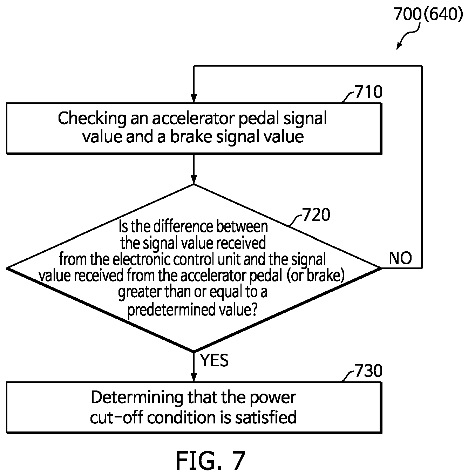

In such an abnormal case, the battery management system 130 may determine whether a power cut-off condition is satisfied (640) by comparing the values, durations, etc., of each of the BMS accelerator pedal signal, the BMS brake signal, the ECU accelerator pedal signal, and the ECU brake signal with one another. The method in which the battery management system 130 determines whether the power cut-off condition is satisfied will be described in further detail below with reference to FIG. 7. As a result of the determination, if the battery management system 130 determines that the electronic control unit 120 is in an emergency situation where the electronic control unit 120 is operating abnormally and that the power cut-off condition is satisfied, the battery management system 130 may generate and transmit an emergency output cut-off signal 650 to the electronic control unit 120.

If there are no problems with the communication between the electronic control unit 120 and the battery management system 130 and the communication between the electronic control unit 120 and the power control unit 150, the electronic control unit 120 may receive the emergency output cut-off signal 650 from the battery management system 130 and accordingly transmit a battery output control signal 660 including the battery output cut-off signal to the power control unit 150. Accordingly, the power control unit 150 may cut off the battery output (670) according to the received battery output control signal 660.

FIG. 7 is a flowchart showing a method 700 in which the battery management system 130 of FIG. 6 determines whether the power cut-off condition is satisfied according to some embodiments of the present disclosure. In some embodiments, the process 700 (640) in which the battery management system 130 determines whether the power cut-off condition is satisfied may begin with the battery management system 130 checking an accelerator pedal signal value (or a BMS accelerator pedal signal value) received from the accelerator pedal and a brake signal value (or a BMS brake signal value) received from the brake (710), and checking an accelerator pedal signal value (or an ECU accelerator pedal signal value) and a brake signal value (or an ECU brake signal value) recognized by the electronic control unit 120 received from the electronic control unit 120.

Next, the battery management system 130 may compare the BMS accelerator pedal signal value and the ECU accelerator pedal signal value and determine whether the difference is greater than or equal to a first predetermined value (or a first value; 720). Further, the battery management system 130 may compare the BMS brake signal value and the ECU brake signal value received together and determine whether the difference is greater than or equal to a second predetermined value (or a second value; 720). Here, the first predetermined value and the second predetermined value may be the same or may be different. Moreover, the first predetermined value or the second predetermined value may correspond to a particular number or may include a particular numerical range. For example, the cases where the difference between the accelerator pedal signal value received by the battery management system from the electronic control unit and the accelerator pedal signal value received by the electronic control unit from the accelerator pedal is greater than or equal to a set or predetermined value may include not only the case where the BMS accelerator pedal signal value (e.g., 70) is greater than the ECU accelerator pedal signal value (e.g., 60) but also the case where the BMS accelerator pedal signal value (e.g., 70) is greater than a particular numerical range (e.g., 55 to 65 or 60 to 70) including the ECU accelerator pedal signal value (e.g., 60).

In action 720, if the difference between the BMS brake signal value and the ECU brake signal value is greater than or equal to the first predetermined value and/or the difference of the BMS accelerator signal value and the ECU accelerator signal value is greater than or equal to the second predetermined value, the battery management system 130 may determine that the power cut-off condition has been satisfied (730). However, if the difference does not or the differences do not correspond to being greater than or equal to the first predetermined value or the second predetermined value, the battery management system 130 may determine that the power cut-off condition has not been satisfied. In such examples, the battery management system 130 may wait until it receives the next accelerator pedal signal value and brake signal value.

Through such a configuration, the battery management system 130 can supplementarily perform the power control of the electric vehicle in accordance with the operating state of the electronic control unit 120 by not only receiving an accelerator pedal signal or a brake signal from the accelerator pedal or the brake, but also receiving a signal from the electronic control unit 120, which is a priority power control device.

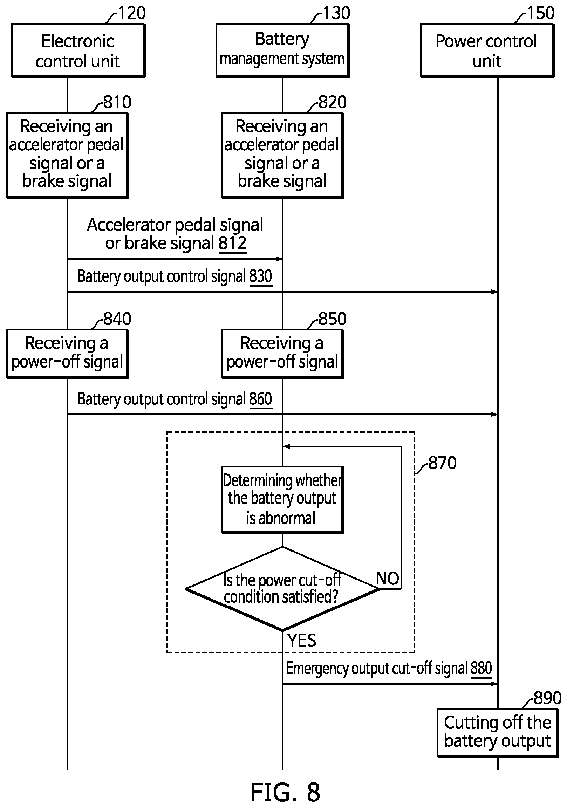

FIG. 8 is a diagram showing a method in which the battery management system 130 controls the power of the electric vehicle according to some embodiments of the present disclosure. In describing FIG. 8 below, descriptions of the parts shared/common with FIGS. 4 and 6 may not be repeated. For example, actions in which the electronic control unit 120 receives an accelerator pedal signal or brake signal (810) or transmits the accelerator pedal signal or brake signal 812 recognized by the electronic control unit 120 to the battery management system 130, or actions in which the electronic control unit 120 transmits a battery output control signal 830 to the power control unit 150 in FIG. 8 may correspond to actions 610, 612, and 630 of FIG. 6, respectively. Further, actions in which the electronic control unit 120 receives a power-off signal from the power button (840), and accordingly, the electronic control unit 120 transmits a battery output control signal 860 to the power control unit 150 may correspond to actions 440 and 460 of FIG. 4, respectively.

Moreover, FIG. 8 differs from FIG. 6 in that it includes processing actions for a case where a problem occurs in communication between the electronic control unit 120 and the battery management system 130 or communication between the electronic control unit 120 and the power control unit 150. In such examples, the electronic control unit 120 of FIG. 8 may fail to receive the emergency output cut-off signal 650 from the battery management system 130, unlike the electronic control unit 120 of FIG. 6. Accordingly, the electronic control unit 120 cannot transmit the battery output control signal 660 including the battery output cut-off signal to the power control unit 150, and the power control unit 150 cannot cut off the battery output (670). In such an urgent situation (e.g., an emergency situation), the battery management system 130 may predominantly control the battery power of the electric vehicle in place of the electronic control unit 120.

In some embodiments, the battery management system 130 may receive an accelerator pedal signal and/or brake signal (820) and may also receive the accelerator pedal signal and/or brake signal 812 recognized by the electronic control unit 120 from the electronic control unit. Here, the battery management system 130 may check accelerator pedal signal value (or BMS accelerator pedal signal value), accelerator pedal signal duration (or BMS accelerator pedal signal duration), brake signal value (or BMS brake signal value), and brake signal duration (or BMS brake signal duration) information. Further, the battery management system 130 may receive a battery output current from the battery module or the power control unit. Moreover, the battery management system 130 may receive a power-off signal (850).

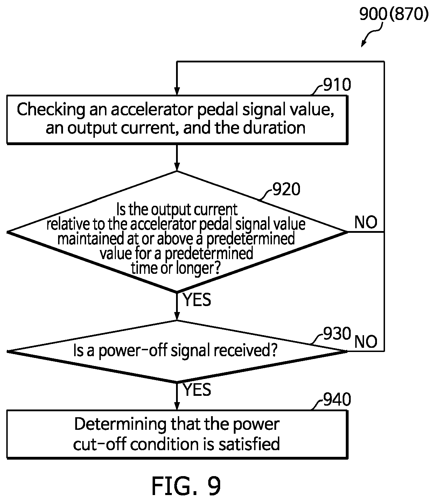

In some embodiments, the battery management system 130 may determine whether a battery output is abnormal based on the received signal information and thus determine whether a power cut-off condition is satisfied (870). Here, the specific process in which the battery management system 130 determines whether the battery output is abnormal based on the received signal information and determines whether the power cut-off condition is satisfied will be described in further detail with reference to FIGS. 9, 10, and 11 below. If it is determined that the power cut-off condition is satisfied, the battery management system 130 may cause the power control unit 150 to cut off the output of the battery (890) by transmitting an emergency output cut-off signal 880 to the power control unit 150 in place of the electronic control unit 120.

Through such a configuration, the battery management system 130 can predominantly perform the power control of the electric vehicle when the operating state of the electronic control unit 120, which is the priority power control device, is abnormal in a state where the accelerator pedal signal value and the brake signal value have been received from the accelerator pedal or the brake.

FIG. 9 is a flowchart showing a method 900 in which the battery management system 130 of FIG. 8 determines whether the power cut-off condition is satisfied according to some embodiments of the present disclosure. Referring to FIG. 9, the method 900 (870) in which the battery management system 130 of FIG. 8 determines whether the power cut-off condition is satisfied may begin with the battery management system 130 checking the received BMS accelerator pedal signal value and BMS accelerator pedal duration, and the output current received from the battery module (910).

Here, the battery management system 130 may store normal battery output information (e.g., a battery output current value) in accordance with the accelerator pedal signal value in memory in advance. The normal battery output information (e.g., a normal output battery may refer to a battery output when an operating state of the electric vehicle is normal or, e.g., healthy in other words) in accordance with the accelerator pedal signal value may correspond to a criterion for determining whether the battery output is abnormal.

For example, the maximum value of the normal battery output current in accordance with the accelerator pedal signal value may be about 1 A if the accelerator pedal signal value is less than 100, may be about 5 A if the accelerator pedal signal value is 100 or higher and less than 300, may be about 10 A if the accelerator pedal signal value is 300 or higher and less than 500, may be about 20 A if the accelerator pedal signal value is 500 or higher and less than 700, may be about 30 A if the accelerator pedal signal value is 700 or higher and less than 1000, and may be about 50 A if the accelerator pedal signal value is 1000 or higher. However, the normal battery output information in accordance with the accelerator pedal signal value is not limited thereto, but may vary depending on the type of electric vehicle, the type of battery pack included in the electric vehicle, or the operating environment.

In some embodiments, the battery management system 130 may compare the received output current relative to the received BMS accelerator pedal signal value with the normal battery output information in accordance with the accelerator pedal signal value (hereinafter, a first output value/predetermined first output value), and may determine whether the received output current relative to the received BMS accelerator pedal signal value is greater than or equal to the predetermined first output value. Further, the battery management system 130 may determine whether the received output current relative to the received BMS accelerator pedal signal value is maintained at or above the predetermined first output value for a set or predetermined period of time or longer (920). For example, the battery management system 130 may determine whether the received BMS accelerator pedal signal value is 78, the received output current value is 25 A to 30 A or higher, and the output current value is maintained for 10 seconds or longer. Here, the predetermined first output value and the set or predetermined period of time may correspond to particular numbers or particular numerical ranges.

In action 920, if the time during which the received output current relative to the received BMS accelerator pedal signal value lasts at or above the predetermined first output value is not greater than or equal to a set or predetermined duration, the battery management system 130 may presume that the received BMS accelerator pedal signal is a signal generated by operating the accelerator pedal by the user during normal operation of the electric vehicle. In such examples, the battery management system 130 may determine that the power cut-off condition has not been satisfied. Accordingly, the battery management system 130 may recognize that the operating state of the electric vehicle is normal and wait until it receives the next signal information.

Further, the battery management system 130 may check whether it receives a power-off signal from the power button (930) if the time during which the received output current relative to the received BMS accelerator pedal signal value lasts at or above the predetermined first output value is greater than or equal to the set or predetermined duration.

In action 930, if the battery management system 130 does not receive a power-off signal, the battery management system 130 may presume that the received BMS accelerator pedal signal is a signal generated by operating the accelerator pedal by the user during normal operation of the electric vehicle. In such examples, the battery management system 130 may determine that the power cut-off condition has not been satisfied. Accordingly, the battery management system 130 may recognize that the operating state of the electric vehicle is normal and wait until it receives the next signal information.

However, if the battery management system 130 receives a power-off signal, the battery management system 130 may presume that an emergency situation, such as an abnormal rise in the battery output current value even if the user has lightly depressed the accelerator pedal, has occurred. Accordingly, the battery management system 130 may determine that the power cut-off condition is satisfied (940).

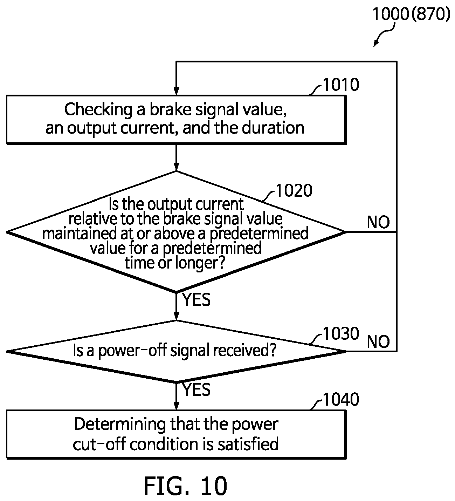

FIG. 10 is a flowchart showing a method 1000 in which the battery management system 130 of FIG. 8 determines whether the power cut-off condition is satisfied according to some embodiments of the present disclosure. Referring to FIG. 10, the method 1000 (870) in which the battery management system 130 of FIG. 8 determines whether the power cut-off condition is satisfied may begin with checking the received BMS brake signal value and BMS brake signal duration, and the output current received from the battery module (1010).

Here, the battery management system 130 may store normal battery output information in accordance with the brake signal value in memory in advance. The normal battery output information in accordance with the brake signal value (e.g., a normal output battery may refer to a battery output when an operating state of the electric vehicle is normal or, e.g., healthy in other words) may correspond to a criterion for determining whether the battery output is abnormal.

The battery management system 130 may compare the received output current relative to the received BMS brake signal value with the normal battery output information in accordance with the brake signal value (or a second output value/predetermined second output value), and may determine whether the received output current relative to the received BMS brake signal value is greater than or equal to the predetermined second output value. Further, the battery management system 130 may determine whether the received output current relative to the received BMS brake signal value is maintained at or above the predetermined second output value for a set or predetermined period of time or longer (1020). Here, the predetermined second output value and the set or predetermined period of time may correspond to particular numbers or particular numerical ranges.

In action 1020, the battery management system 130 may assume a case where the output current of the battery module does not drop but remains constant or rises even when the received BMS brake signal value maintains a constant value. For example, in a situation where the output current consumed by the electric vehicle is 20 A, if the received output current does not drop below 20 A but remains at 20 A or rises above 20 A even when the BMS brake signal value is 200 and the BMS brake signal duration is 10 seconds or longer, the battery management system 130 may determine that the output current relative to the brake signal value is maintained at or above a set or predetermined value for a set or predetermined period of time or longer. Next, the battery management system 130 may determine whether it receives a power-off signal from the power button (1030). If the battery management system 130 receives a power-off signal, the battery management system 130 may determine that the electronic control unit 120 is not operating properly even though the user is depressing the brake pedal. For example, the battery management system 130 may presume that the user has pressed the power button to turn off the power in order to stop the electric vehicle in an emergency situation where the electronic control unit 120 does not send a battery output cut-off signal to the power control unit 150 and the drive device fails to decelerate. In such examples, the battery management system 130 may determine that the power cut-off condition is satisfied (1040). Therefore, the battery management system 130 can transmit a battery output cut-off signal directly to the power control unit 150 by bypassing the electronic control unit 120, and thus, the power control unit 150 can cut off the power supply to the drive device.

In action 1020, the battery management system 130 may determine that the BMS brake signal duration does not correspond to being greater than or equal to the set or predetermined period of time if the output current relative to the BMS brake signal value does not correspond to being greater than or equal to the predetermined second output value or even if it is greater than or equal to the predetermined second output value. In such a case, the battery management system 130 may presume that the user briefly depressed and released the brake pedal or that the user had no intention to decelerate or stop the electric vehicle. Thus, the battery management system 130 may determine that the power cut-off condition has not been satisfied. Accordingly, the battery management system 130 may determine that the operation of the electric vehicle is normal and wait until it receives the next brake signal.

Likewise, in actions 1020 and 1030, even if the battery management system 130 determines that the output current relative to the brake signal value is maintained at or above the predetermined ideal second output value for the set or predetermined period of time or longer, the battery management system 130 may presume that the user has no intention to interrupt the power supply to the battery unless it receives a power-off signal. Thus, the battery management system 130 may determine that the power cut-off condition has not been satisfied. Accordingly, the battery management system 130 may determine that the operation of the electric vehicle is normal and wait until it receives the next brake signal.

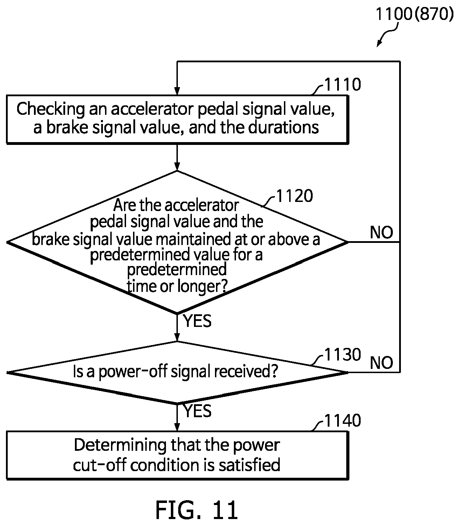

FIG. 11 is a flowchart showing a method 1100 in which the battery management system 130 of FIG. 8 determines whether the power cut-off condition is satisfied according to some embodiments of the present disclosure. Referring to FIG. 11, the method 1100 (870) in which the battery management system 130 of FIG. 8 determines whether the power cut-off condition is satisfied may begin with checking the received BMS accelerator pedal signal value, BMS accelerator pedal signal duration, BMS brake signal value, BMS brake signal duration, and the output current received from the battery module or power control unit (1110).

Here, the battery management system 130 may store normal battery output information in accordance with the accelerator pedal signal value and normal battery output information in accordance with the brake signal value in memory in advance. The normal battery output information in accordance with the accelerator pedal signal value and the normal battery output information in accordance with the brake signal value may correspond to criteria for determining whether the battery output is abnormal.

Next, if each of the BMS accelerator pedal signal value and the BMS brake signal value is greater than or equal to the normal battery output information in accordance with the accelerator pedal signal value (or a third output value/predetermined third output value) and the normal battery output information in accordance with the brake signal value (or a fourth output value/predetermined fourth output value), the battery management system 130 may determine whether the BMS brake signal duration and the BMS accelerator pedal signal duration are each greater than or equal to a set or predetermined period of time (1120). Here, the predetermined third output value and fourth output value may be the same or different. Further, the set or predetermined durations corresponding to the brake signal and the accelerator pedal signal may each be different. Moreover, the predetermined third output value and fourth output value, and the set or predetermined period of time may correspond to particular numbers or particular numerical ranges.

In action 1120, if the BMS accelerator pedal signal value is greater than or equal to the predetermined third output value, the BMS brake signal value is greater than or equal to the predetermined fourth output value, and the BMS brake signal duration and the BMS accelerator pedal signal duration are each greater than or equal to the set or predetermined period of time, the battery management system 130 may determine whether a power-off signal is received from the power button (1130).

If the battery management system 130 receives a power-off signal, the battery management system 130 may presume that the user has pressed the power-off button in order to stop the electric vehicle in an emergency situation where the electric vehicle fails to decelerate or stop because the electronic control unit 120 is not operating normally in response to an abnormal operation in which the user concurrently (e.g., simultaneously) depresses the accelerator pedal and the brake. Accordingly, the battery management system 130 may determine that the power cut-off condition is satisfied (1140).

However, if the BMS accelerator pedal signal value is not greater than or equal to the predetermined third output value, if the BMS brake signal value is not greater than or equal to the predetermined fourth output value, or if the BMS brake signal duration or the BMS accelerator pedal signal duration is not greater than or equal to the set or predetermined period of time, the battery management system 130 may presume that the user depressed the accelerator pedal and the brake at the same time in a momentary mistake but had no intention of stopping the electric vehicle. Thus, the battery management system 130 may determine that the power cut-off condition has not been satisfied.

In action 1130, even if the BMS accelerator pedal signal value is greater than or equal to the predetermined third output value, the BMS brake signal value is greater than or equal to the predetermined fourth output value, and the BMS brake signal duration and the BMS accelerator pedal signal duration correspond, respectively, to being greater than or equal to the set or predetermined period of time, the battery management system 130 may likewise presume that the user had no intention of stopping the electric vehicle if the battery management system 130 does not receive the power-off signal. Thus, the battery management system 130 may determine that the power cut-off condition has not been satisfied.

If the battery management system 130 determines that the power cut-off condition is not satisfied in the combinations of the various signals or signal durations described above, the battery management system 130 may determine that the operation of the electric vehicle is normal and wait until it receives the next brake signal, accelerator pedal signal, etc.

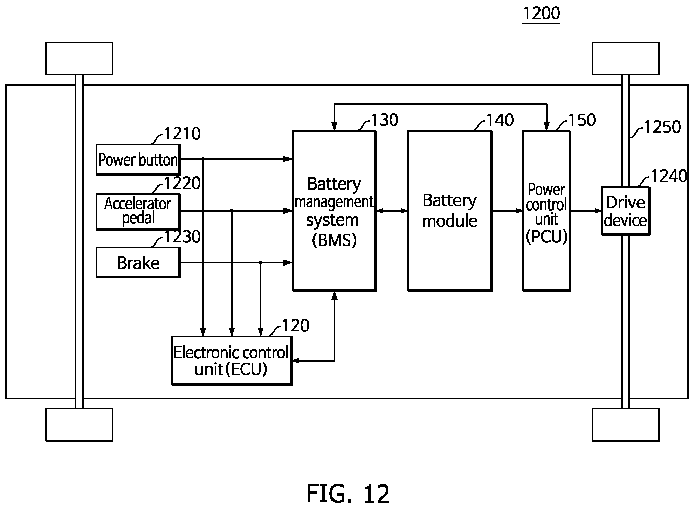

FIG. 12 is a diagram showing an example of an electric vehicle 1200 including a battery management system that uses a power control method for an electric vehicle in accordance with some embodiments of the present disclosure. The electric vehicle 1200 may include a power button 1210 configured to generate a power-on signal or a power-off signal in response to an operation of a user, an accelerator pedal 1220 configured to generate an accelerator pedal signal in response to an operation of the user, a brake 1230 configured to generate a brake signal in response to an operation of the user, a battery module 140 configured to supply electrical power, a battery management system 130 configured to monitor the state of the battery module and control the operation of the battery module based on the state of the battery module, a power control unit 150 configured to control a power output of the battery module, an electronic control unit 120 configured to control the operation of the electric vehicle or the output of the battery module according to the accelerator pedal signal, brake signal, power on/off signal, etc., a drive device 1240 configured to operate by power supplied according to a battery control signal transmitted from the electronic control unit 120 or the power control unit 150, and a drive shaft 1250 configured to rotate by the drive device 1240 and connected to the wheels of the electric vehicle 1200. For example, the battery management system 130 may correspond to the battery management system 130 described with reference to FIGS. 1 to 11.

In some embodiments, the battery management system 130 may determine whether a power cut-off condition is satisfied based on at least one of a brake signal received from the brake 1230 or an accelerator pedal signal received from the accelerator pedal 1220, and generate a power control signal including an emergency power cut-off signal if the power cut-off condition is satisfied.

In some embodiments, if the battery management system 130 determines that the power cut-off condition is satisfied based on at least one of the brake signal received from the brake 1230 or the accelerator pedal signal received from the accelerator pedal 1220, the battery management system 130 may generate and transmit an emergency power cut-off signal to the power control unit 150 if a power-off signal is received from the power button 1210.

In some embodiments, the battery management system 130 may receive at least one of an ECU brake signal or an ECU accelerator pedal signal recognized by the electronic control unit 120 from the electronic control unit 120, and generate and transmit an emergency power cut-off signal to the power control unit 150 if the difference between the value of at least one of the ECU brake signal or the ECU accelerator pedal signal and the value of at least one of the brake signal or the accelerator pedal signal received by the battery management system 130 is greater than or equal to a set or predetermined value.

In some embodiments, the battery management system 130 may include a vehicle emergency stop determination part configured to determine whether a power cut-off condition is satisfied based on at least one of a brake signal received from the brake 1230 or an accelerator pedal signal received from the accelerator pedal 1220, and to generate an emergency power cut-off signal if the power cut-off condition is satisfied, and a battery management part configured to monitor the state of the battery and to control the operation of the battery based on the state of the battery.

In some embodiments, the vehicle emergency stop determination part of the battery management system 130 may generate an emergency power cut-off signal if the value of the brake signal received from the brake 1230 is greater than or equal to a reference value and the brake signal lasts for a set or predetermined period of time or longer. Further, the vehicle emergency stop determination part of the battery management system 130 may generate an emergency power cut-off signal if an output current received from the battery module 140 relative to the value of the accelerator pedal signal received from the accelerator pedal 1220 is greater than or equal to a set or predetermined value, and the accelerator pedal signal lasts for a set or predetermined period of time or longer. Further, the vehicle emergency stop determination part of the battery management system 130 may generate an emergency power cut-off signal if an output current received from the battery module 140 relative to the value of the brake signal received from the brake 1230 is greater than or equal to a set or predetermined value, and the brake signal lasts for a set or predetermined period of time or longer. Further, the vehicle emergency stop determination part of the battery management system 130 may generate an emergency power cut-off signal if each of the value of the brake signal received from the brake 1230 and the value of the accelerator pedal signal received from the accelerator pedal 1220 is greater than or equal to a set or predetermined value, and the brake signal and the accelerator pedal signal last for a set or predetermined period of time or longer. Further, the vehicle emergency stop determination part of the battery management system 130 may generate an emergency power cut-off signal if it receives at least one of an ECU brake signal or an ECU accelerator pedal signal from the electronic control unit 120, and the difference between the value of at least one of the ECU brake signal or the ECU accelerator pedal signal and the value of at least one of the brake signal or the accelerator pedal signal is greater than or equal to a set or predetermined value. Moreover, the vehicle emergency stop determination part of the battery management system 130 may transmit the generated emergency power cut-off signal to the electronic control unit 120.

The configuration and functionality of the electric vehicle 1200 shown in FIG. 12 is merely an example and may be modified according to the performance and implementation requirements of various electric vehicles. For example, one or more components of the battery power control system included in the electric vehicle 1200 may be omitted, the order of each action of the battery power control method executed by the electric vehicle 1200 may be changed, one or more actions may be performed in an overlapping manner, or one or more actions may be performed multiple times repetitively.

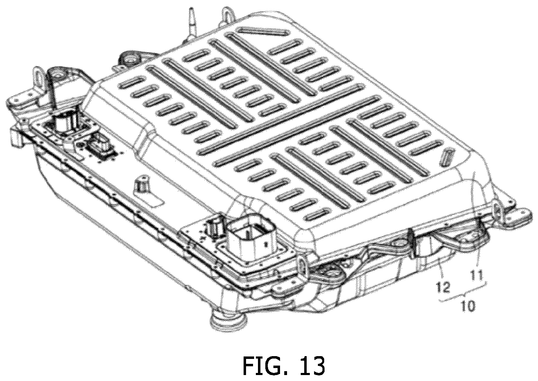

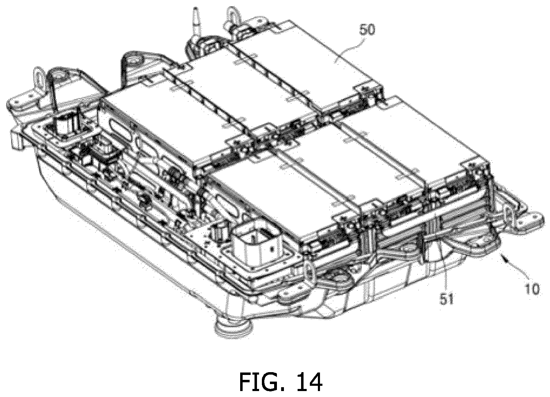

FIGS. 13 and 14 show a battery pack according to one or more embodiments of the present disclosure.

In some embodiments, the battery pack of FIGS. 13 and 14 may include the battery management system 130 and the battery module 140 described with reference to FIGS. 1 to 12.

The battery pack may include a plurality of battery modules 50 and a housing 10 for accommodating the plurality of battery modules 50. For example, the housing 10 may include first and second housings 11 and 12 coupled in opposite directions through the plurality of battery modules 50. The plurality of battery modules 50 may be electrically connected to each other by using a bus bar 51, and the plurality of battery modules 50 may be electrically connected to each other in a series/parallel or series-parallel mixed method, thereby obtaining desired (e.g., required) electrical output.

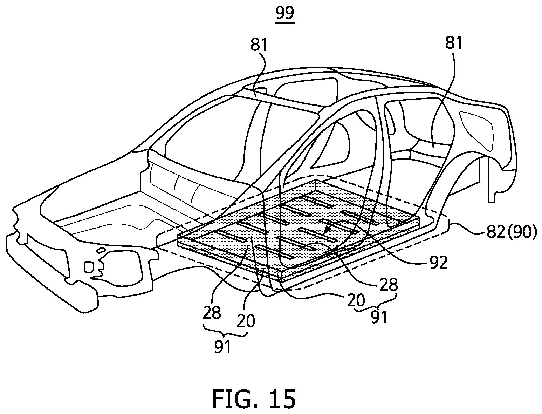

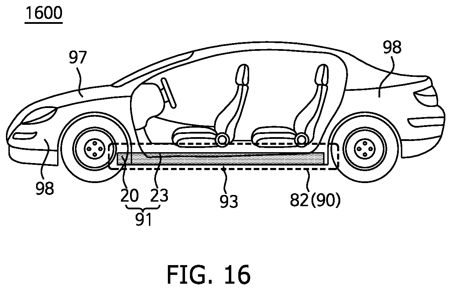

FIGS. 15 and 16 show a vehicle body and vehicle body parts having a battery pack according to one or more embodiments of the present disclosure.

In some embodiments, the battery pack and vehicle body of FIGS. 15 and 16 may include the battery management system 130 and the battery module 140 described with reference to FIGS. 1 to 12.

In FIG. 15, a battery pack 91 may include a battery pack cover 28, which is a part of a vehicle underbody 92, and a pack frame 20 disposed under the vehicle underbody 92. The pack frame 20 and the battery pack cover 13 may be integrally formed with a vehicle floor 82. Herein, the pack frame 20 may refer to a housing for accommodating battery modules within a battery pack.

The vehicle underbody 92 separates the inside and outside of a vehicle, and the pack frame 20 may be disposed outside the vehicle.

FIG. 16 is a schematic side view of a vehicle according to one or more embodiments of the present disclosure.

A vehicle 1600 may be formed by combining additional parts, such as a hood 97 in front of the vehicle and fenders 98 respectively located in the front and rear of the vehicle to a vehicle body 99.

The vehicle 1000 may further include a vehicle floor 82, which is one of the vehicle body parts 90 including the battery pack 91 including the pack frame 20 and the battery pack cover 23.

The above-described method may be provided as a computer program stored in a computer-readable recording medium to be executed by a computer. Media may continuously store executable programs on a computer or may temporarily store the executable programs for execution or download. Furthermore, media may be a variety of recording or storage device in the form of a combination of a single or several pieces of hardware, and is not limited to a media directly connected to a computer system and may be distributed over a network. Media may include, for example, magnetic media such as hard disks, floppy disks, or magnetic tapes, optical recording media such as CD-ROMs or DVDs, magneto-optical media such as floptical disks, read-only memory (ROM), random-access memory (RAM), flash memory, and so on, and may be configured to store program instructions.

The methods, operations, or techniques of the present disclosure may also be implemented by various embodiments. For example, the techniques may also be implemented by hardware, firmware, software, or a combination thereof. Those skilled in the art will understand that the various illustrative logical blocks, modules, circuits, and algorithm actions described in connection with the present disclosure may be implemented by electronic hardware, computer software, or combinations of both. To clearly describe the interchange of hardware and software, various illustrative components, blocks, modules, circuits, and actions are described above generally in terms of function. Whether such function is implemented by hardware or software depends on specific application and design requirements provided on the overall system. Those skilled in the art may implement the functions described in various ways for each particular application, but such implementations should not be interpreted to be departed from the scope of the present disclosure.

In hardware implementation, the processing units used to perform techniques may also be implemented within one or more application-specific integrated circuits (ASICs), digital signal processing (DSP) devices, graphics processing units (GPUs), digital signal processing devices (DSPDs), programmable logic devices (PLDs), field programmable gate arrays (FPGAs), processors, controllers, microcontrollers, microprocessors, electronic devices, other electronic units designed to perform the functions described in the present disclosure, computers, or combinations thereof.

Accordingly, the various illustrative logical blocks, modules, and circuits described in connection with the present disclosure may be implemented or performed by general-purpose processors, DSPs, ASICs, FPGAs or other programmable logic devices, discrete gates or transistor logics, discrete hardware components, or any combination of components designed to perform the functions described in the present disclosure. A general-purpose processor may be a microprocessor, but in the alternative, the processor may also be any known processor, controller, microcontroller, or state machine. A processor may also be implemented by a combination of computing devices, for example, a combination of a DSP and a microprocessor, a combination of a plurality of microprocessors, a combination of a DSP core and one or more microprocessors, or a combination of other configurations.

In implementing firmware and/or software, techniques may also be implemented by instructions stored in a computer-readable medium, such as RAM, ROM, non-volatile random access memory (NVRAM), programmable read-only memory (PROM), erasable programmable read-only memory (EPROM), electrically erasable programmable read-only memory (EEPROM), flash memory, a compact disk (CD), or a magnetic or optical data storage device. Instructions may also be executable by one or more processors and may cause a processor(or processors) to perform certain aspects of the functions described in the present disclosure.

When implemented in software, the techniques may also be stored in or transmitted through a computer-readable medium as one or more instructions or codes. Computer-readable media include both computer storage media and communication media, in addition to any medium that facilitates transfer of a computer program from one place to another place. Storage media may also be any available media that may be accessed by a computer. By way of a non-limiting example, such computer-readable media may include RAM, ROM, EEPROM, CD-ROM or another optical disk storage, a magnetic disk storage or other magnetic storage devices, or any other medium that may be used to transfer or store the desired program codes in the form of instructions or data structures and may be accessed by a computer. Also, any connection may suitably be made by a computer-readable medium.

A software module may also be included in RAM, flash memory, ROM, EPROM, EEPROM, registers, a hard disk, a portable disk, CD-ROM, or a storage medium of any other known form. An example storage medium may be connected to a processor such that the processor may read information from or write information to the storage medium. In some examples, the storage medium may be integrated into the processor. The processor and storage medium may also be included in an ASIC. The ASIC may also be included in a user terminal. In some examples, the processor and storage medium may also be included in the user terminal as separate components.

Although the above-described embodiments are described as utilizing aspects of the presently disclosed subject matter in one or more standalone computer systems, the present disclosure is not limited thereto and may also be implemented in conjunction with any computing environment, such as a network or distributed computing environment. Furthermore, aspects of the subject matter of the present disclosure may also be implemented in multiple processing chips or devices, and storages may also be similarly affected by multiple devices. Such devices may include personal computers (PCs), network servers, and portable devices.

Although the present disclosure has been described with reference to embodiments and drawings illustrating aspects thereof, the present disclosure is not limited thereto. Various modifications and variations can be made by a person skilled in the art to which the present disclosure belongs within the scope of the technical scope of the present disclosure and the claims and their equivalents, below.

### Description of Reference Numerals and Symbols

100: Power control system of electric vehicle
130: Battery management system (BMS)
140: Battery module
150: Power control unit (PCU)

## Claims

1. A method, by a battery management system (130), of controlling power of a battery of an electric vehicle (1200), comprising:
receiving (420, 620, 820) at least one of a brake signal or an accelerator pedal signal from at least one of a brake or an accelerator pedal;
determining (470, 500, 640, 700, 870, 900, 1000, 1100) whether at least one of the brake signal or the accelerator pedal signal satisfies a power cut-off condition; and
generating (480, 650, 880) an emergency output cut-off signal in response to the power cut-off condition being satisfied.

2. **The** method as claimed in claim 1, wherein the determining (470, 500) whether at least one of the brake signal or the accelerator pedal signal satisfies the power cut-off condition comprises:
determining (510) whether a value of the brake signal is greater than or equal to a reference value; and
determining (520) whether the brake signal lasts for at or above the reference value a predetermined period of time or longer in response to the value of the brake signal being greater than or equal to the reference value.

3. The method as claimed in one of the preceding claims 1 to 2, wherein the determining (870, 900) whether at least one of the brake signal or the accelerator pedal signal satisfies the power cut-off condition comprises:
receiving (910) a value of the accelerator pedal signal and an output current of the battery;
determining (920) whether the received output current corresponding to the value of the accelerator pedal signal is greater than or equal to a predetermined normal output current stored in a memory in accordance with the value of the accelerator pedal signal; and
determining (920) whether the received output current of the battery lasts at or above the predetermined normal output current for a predetermined period of time or longer in response to the received output current being greater than or equal to the predetermined normal output current.

4. The method as claimed in one of the preceding claims 1 to 3, wherein the determining (870, 1000) whether at least one of the brake signal or the accelerator pedal signal satisfies the power cut-off condition comprises:
receiving (1010) a value of the brake signal and an output current of the battery;
determining (1020) whether the received output current corresponding to the value of the brake signal is greater than or equal to a predetermined normal output current stored in a memory in accordance with the value of the brake pedal signal; and
determining (1020) whether the received output current of the battery lasts at or above the predetermined normal output current for a predetermined period of time or longer in response to the received output current of the battery being greater than or equal to the predetermined normal output current.

5. The method as claimed in one of the preceding claims 1 to 4, wherein the determining (870, 1100) whether at least one of the brake signal or the accelerator pedal signal satisfies the power cut-off condition comprises:
determining (1120) whether each of a value of the brake signal and a value of the accelerator pedal signal is greater than or equal to a predetermined value; and
determining (1120) whether the brake signal and the accelerator pedal signal last at or above the predetermined value for a predetermined period of time or longer in response to each of the value of the brake signal and the value of the accelerator pedal signal being greater than or equal to the predetermined value.

6. The method as claimed in one of the preceding claims 1 to 5, further comprising:
receiving (612) at least one of an ECU brake signal or an ECU accelerator pedal signal from an electronic control unit, ECU, (120),
wherein the determining (640) whether at least one of the brake signal or the accelerator pedal signal satisfies the power cut-off condition comprises:
calculating a difference between a value of at least one of the ECU brake signal or the ECU accelerator pedal signal and a value of at least one of the brake signal or the accelerator pedal signal; and
determining whether the difference is greater than or equal to a predetermined value.

7. The method as claimed in claim 6, further comprising:
transmitting (650) the emergency output cut-off signal to the ECU (120).

8. The method as claimed in one of the preceding claims 1 to 5, further comprising:
determining (440, 850) whether a power-off signal is received from a power button; and
transmitting (480, 880) the emergency output cut-off signal to a power control unit in response to the power-off signal being received.

9. A battery management system (130) comprising:
a battery management part (354) configured to monitor a state of a battery module (140) and to control operation of the battery module (140) based on the state of the battery module (140); and
a vehicle emergency stop determination part (352) configured to:
determine whether a power cut-off condition is satisfied based on at least one of a brake signal or an accelerator pedal signal, and
generate an emergency power cut-off signal in response to the power cut-off condition being satisfied.

10. The battery management system (130) as claimed in claim 9, wherein the vehicle emergency stop determination part (352) is configured to generate the emergency power cut-off signal in response to a value of the brake signal being greater than or equal to a reference value and the brake signal lasts at or above the reference value for a predetermined period of time or longer.

11. The battery management system (130) as claimed in any of the preceding claims 9 to 10, wherein the vehicle emergency stop determination part (352) is configured to generate the emergency power cut-off signal in response to an output current of the battery module (140) corresponding to a value of the accelerator pedal signal being greater than or equal to a predetermined normal output current stored in a memory in accordance with the value of the accelerated pedal signal and the accelerator pedal signal lasting at or above the predetermined normal output current for a predetermined period of time or longer.

12. The battery management system (130) as claimed in any of the preceding claims 9 to 11, wherein the vehicle emergency stop determination part (352) is configured to generate the emergency power cut-off signal in response to an output current of the battery module (140) corresponding to a value of the brake signal being greater than or equal to a predetermined normal output current stored in a memory in accordance with the value of the brake signal and the brake signal lasting at or above the predetermined normal output current for a predetermined period of time or longer.

13. The battery management system (130) as claimed in any of the preceding claims 9 to 12, wherein the vehicle emergency stop determination part (352) is configured to generate the emergency power cut-off signal in response to each of a value of the brake signal and a value of the accelerator pedal signal being greater than or equal to a predetermined value, and the brake signal and the accelerator pedal signal lasting at or above the predetermined value for a predetermined period of time or longer.

14. The battery management system (130) as claimed in any of the preceding claims 9 to 13, wherein the vehicle emergency stop determination part (140) is configured to:
receive at least one of an ECU brake signal or an ECU accelerator pedal signal from an electronic control unit, ECU, (120), and
generate the emergency power cut-off signal in response to a difference between a value of at least one of the ECU brake signal or the ECU accelerator pedal signal and a value of at least one of the brake signal or the accelerator pedal signal being greater than or equal to a predetermined value.

15. The battery management system as claimed in claim 14, wherein the vehicle emergency stop determination part is configured to transmit the emergency power cut-off signal to the ECU (120).
